# EUROPEAN PATENT APPLICATION

(11) **EP 0 926 333 A1**
(43) Date of publication of application: **30.06.1999**
(21) Application number: 97403164.3
(22) Date of filing: 26.12.1997
(51) Int. Cl.: F02K 1/70

(54) **Thrust reverser configuration**

(71) Applicant: SOCIETE DE CONSTRUCTION DES AVIONS HUREL-DUBOIS (société anonyme), F-92360 Meudon-La-Forêt (FR)
(72) Inventor: Frank, Joel Hudson, 75015 Paris (FR); Meyer, Pascal Jérôme, 92140 Clamart (FR)
(74) Representative: Sauvage, Renée

(57) **Abstract**

In a door thrust reverser for an aircraft turbojet, in which, in the forward thrust mode, a cavity (3) exists between the fan duct line profile (6) and the inner surface (14a) of each door, the invention provides a fixed arched device (4) located in said door cavity (3), roughly concentrically to the annular channel (C) for the flow of the gas flux F1, which channel is defined between the outer casing and the engine structure. The arched device (4) is rigidly attached at each end to the structural beams of the casing in such a fashion as to not protrude past the fan duct line (6).

In reverse thrust mode the arched device (4) entrains the flow (F1) by virtue of a flow depressurization on its aft side, thereby enhancing the flow discharge and velocity characteristics.

## Description

The present invention relates to a thrust reversal system with pivoting doors.

More particularly, the invention relates to a thrust reverser for an aircraft turbojet with an outer casing surrounding an engine structure and defining therewith an annular channel for the flow of a gas flux from an upstream region to a downstream region, said reverser comprising mobile doors, each located in an opening provided in an intermediate section of said casing and defined, upstream, by a forward fixed structure having a front frame, downstream, by an aft fixed structure and laterally by side beams, said doors, operated by an actuation system, being pivotable from an inactive or forward thrust mode position, in which they are located in the prolongation of the fixed part of the casing, to an active or thrust reversal mode position in which they extend transversely with respect to the annular channel which they close-off while freeing in the casing a passage for radially deflecting the flux outwardly and upstream.

In such thrust reversers, each door has upstream and downstream extremities, and upstream and downstream inner surfaces with an inflection point between said upstream and downstream inner surfaces, and a door cavity is formed between said door inflection point, said door upstream inner surface and said door upstream extremity.

The outer periphery of the annular channel is defined by the inner wall of the forward fixed structure and the inner wall of the aft fixed structure, the continuity of said outer periphery being interrupted by the opening provided for the door and a fan duct line profile joining virtually the two inner walls ; the downstream part of the inner wall of the forward fixed structure forms a fan discharge edge, generally called fan ramp.

In thrust reversers of this type, known for example from US Patent 4 485 970 (Fournier et al), the flow reversal is achieved by constricting the flow between the discharge edge and the pivoting door acting as a blocking device. As the reversed flow approaches the reverser exit plane, it undergoes an accelerated turn about the discharge edge and encounters a large stagnation front produced by the base of the pivoting door. In reverse mode, the depressurization caused by the engine flow and the external free stream flow at the front frame region, behind the fan ramp or discharge edge, entrains a large quantity of external free stream flow into the reverser opening. Large momentum losses are produced at the discharge edge as a result of this external flow opposing the reverser jet axial direction.

One object of the invention is therefore to provide a thrust reverser which enhances the axial flow reversal and flow discharge characteristics in reverse mode. This goal is achieved by the invention which is characterized in that a fixed arched device is located in said door cavity, roughly concentrically to said annular channel ; preferably, said arched device is rigidly attached to said lateral side beams and to said front frame.

While in the prior art thrust reversers of the type shown in above-mentioned US patent N^{o} 4 485 970 (Fournier et al) the discharge edge passively leads the flow into an accelerated turn, the efflux turning arched device of the present invention actively leads the flow over the fan ramp by creating a high total pressure front on its upstream face and a depressurization on its downstream face, entraining the flow forwardly and outwardly, thereby increasing the reverser effectiveness.

The arched efflux turning device of the present invention decreases the radius of curvature of the flow streamlines about the fan ramp center and, in doing so locally, increases the flow effective area about the fan ramp, thereby increasing the discharge characteristics.

In a preferred embodiment, the thrust reverser of the invention comprises one individual arched device and one or more structural bars that can be assembled together into a module or disassembled as individual elements for servicing, said module being rigidly attachable to said lateral side beams and to said front frame.

Movable efflux turning devices are known from FR-A-2 627 807 and FR-A-1 529 361. FR-A-2 627 807 shows a movable efflux turning device that is hinged onto an actuation rod and deploys from a forward mode position into a reverse mode position by virtue of a linkage system that relies on the door actuator to deploy it into the flow. FR-A-1 529 361 shows a plurality of parallel moving vanes that are driven into a reverse mode position by a set of actuators.

The present invention differs from these prior art devices in that the arched device of the invention is a fixed part and is fully independent of the actuation system design and type, whether mechanical, hydraulic or pneumatic.

Furthermore the present invention differs from FR-A-1 529 361 in that the efflux turning device is composed, not of separate elements, but of an individual arched part rigidly constrained at its extremities and fully exposed in forward thrust mode to the engine flow.

The arched device of the present invention can be placed at any axial engine location plane contained between the fan ramp or discharge edge and the pivoting door kink point or inflection point without the limitations of the prior art's actuator displacement.

In a first embodiment, the cross sectional shape of the arched device has an airfoil type profile with the leading edge facing the reverser flow and the trailing edge facing the outwardly and forwardly direction.

In a second embodiment, the cross sectional shape of the arched device has a constant thickness profile.

In both embodiments, the height and the radius of curvature of the arched device cross section are of the order of magnitude of the depth of the door cavity.

In the forward thrust mode position, the arched device is stowed in a zone spanwise bound by the lateral side beams, longitudinally bound by the fan discharge edge and the door inflection point, and radially bound by the fan duct line profile and the upstream inner surface of the door.

However, in some instances the door cavity surface may be further recessed to stow part of the arched device during forward thrust mode position.

On a common thrust and discharge basis, the present invention allows the use of shorter thrust reverser doors and reduced door cavity than would be required for an identical thrust reverser system without the arched device. The benefits inherent to the present invention are shorter doors ensuing from the more favorable aerodynamics of the arched device. Conversely, the present invention can be adapted to any existing pivoting door thrust reverser featuring a cavity in order to enhance its original levels of flow discharge and reverse thrust.

These and other advantages of the present invention will be apparent from the attached description and drawings in which :
Figures 1A and 1B are both general isometric views of the same part of an aircraft equipped with the present invention, in the stowed door (direct thrust mode) position and in the deployed door (thrust reversal mode) position, respectively ;
Figures 2A and 2B are longitudinal cross sectional views of the thrust reverser of Figures 1A and 1B, respectively.
Figures 3A and 3B are perspective views of two types of modules shown in isolation, each formed of an arched device of the present invention and of flow straightener struts.
Figures 4A and 4B show two possible shapes for the cross section of the arched device of the invention, whereas Figure 4B and Figure 4C show two possible orientations for the same cross section shape.
Figure 5 is an axial partial cross sectional view of the thrust reverser of Figures 1A and 2A, featuring a set of flow straightener struts.
Figure 6 is an axial cross sectional view of the thrust reverser of Figures 1B and 2B, i.e. with the thrust reverser doors in the deployed position.
Figure 7 is a view from above of the thrust reverser of Figures 1B and 2B illustrating the possible sweep angles α of the arched device of the invention for efflux control purposes.
Figure 8 is a cross sectional view along line VIII-VIII of Figure 7.
Figure 9 is a perspective view of a four-door thrust reverser equipped with the present invention and showing the thrust reverser doors in the deployed position.

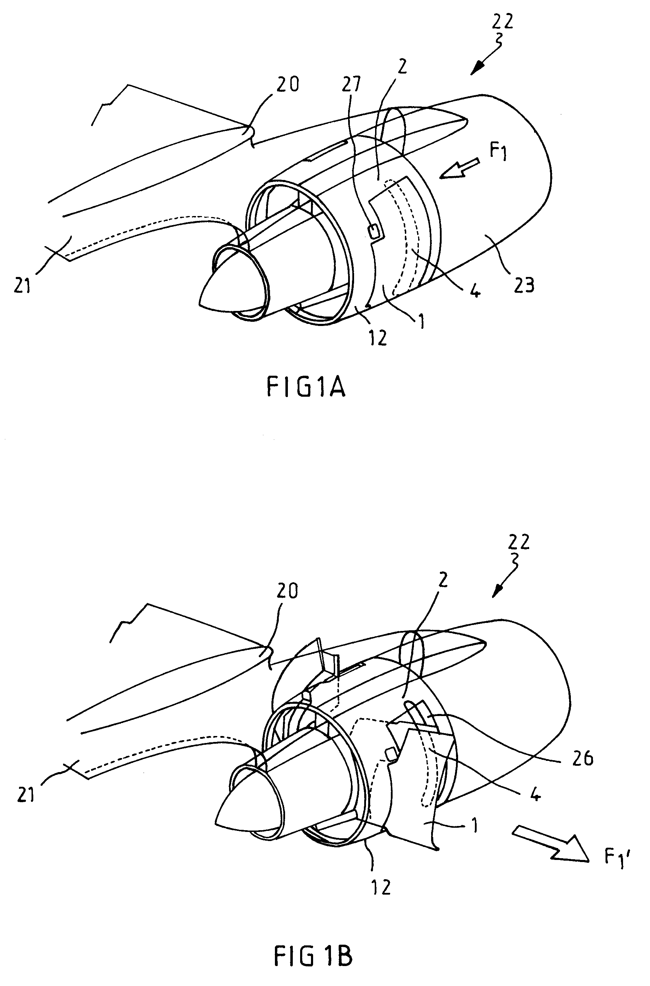

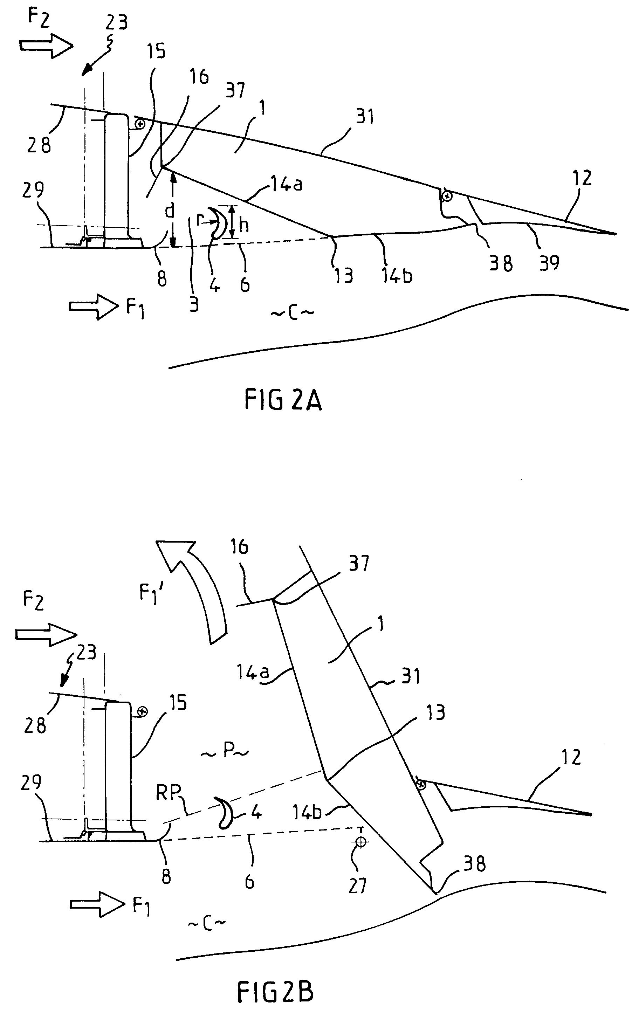

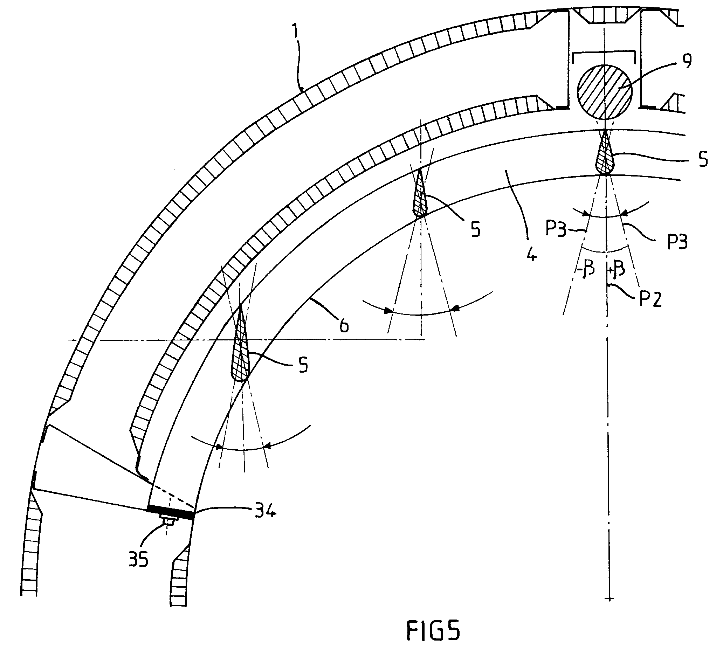

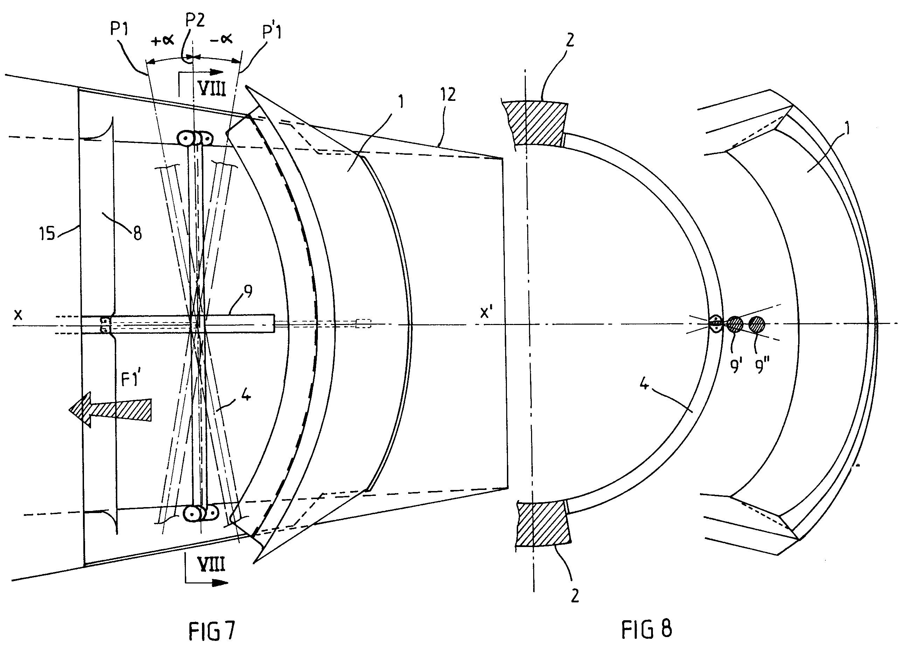

Referring to figures 1A, 1B and 2A, 2B there is seen a part of an aircraft having a wing 20 under which is fixed, by means of a pylon 21, a nacelle 22 comprised of two main parts, namely, from the upstream end to the downstream end with reference to the direction of flow F1 of the jet stream in direct mode (not deflected ; Figure 1A) : an upstream or forward fixed structure 23 situated in the extension of the external wall of the jet pipe, the longitudinal axis of which has been represented as X-X' (figure 7), and a downstream or aft fixed structure 12. The aft fixed structure 12 includes a thrust reverser. An engine, not shown, is surrounded by the nacelle 22. The thrust reverser comprises two openings or pits 26 (figure 1B) with a pivoting door 1 installed in each opening. Each door 1 is adapted to pivot between a closed or stowed position, also called inactive or forward thrust mode or direct mode position, in which it is located in the prolongation of the fixed part 12 of the casing (figures 1A and 2A) and an open or deployed position, also called active or thrust reversal mode position, in which it extends transversely with respect to the annular channel C which it closes-off while freeing in the casing a passage P for radially deflecting the flux F1 outwardly and downstream, as shown by F1' (figures 1B and 2B). More precisely, each door 1 is associated with a means for controlling its movement, such as an actuator 9 (figures 5 and 7) and it pivots around two pivot bearings 27 (figures 1A and 2B) provided in lateral side beams 2 which bound the opening 26.

As can be seen from figures 2A and 2B, the upstream fixed structure 23 comprises an external panel 28 and an internal panel 29, externally bounding, in the annular channel C, the stream of the gaseous flow F1 from the engine, and an upstream structure composed by front frame 15 which joints said panels 28 and 29. The internal panel 29 terminates in a discharge edge or fan ramp 8.

Each door 1 is composed of an external skin 31 which, in the direct jet position, is placed in the extension of the external panel 28 of the upstream fixed structure 23 to constitute the continuous aerodynamic wall bounding the flow external to the engine and represented by the arrow F2 ; of an internal skin 14a,b and of an interior structure, not shown, which joins the panel 31 and the skin 14a,b. The internal skin or surface 14a,b has an upstream extremity 37 and a downstream extremity 38. The upstream internal skin or surface 14a and the downstream internal skin or surface 14b join at an inflection point 13. The door 1 is supplemented at its upstream end 37 by a kicker plate 16 intended to route the reversed outflow when the reverser is in the thrust reversal position, that is to say with the door 1 in the open or deployed position (Figure 1B and 2B), the reverser exit plane RP being illustrated in Figure 2B and being the plane which contains the extremity of the discharge end 8 and which is normal to the uspstream inner surface 14a of the door 1 in the open position thereof.

The outer periphery of the annular channel C is defined by the inner wall 29 of the forward fixed structure 23 and the inner wall 39 of the aft fixed structure 12, and the continuity of said outer periphery is interrupted by the opening 26 provided for the door 1. For the door 1 to give satisfactory performance in the open or thrust reversal position, it is usually necessary that a cavity 3 be formed on the inside of the door 1 when it is in its closed position. The fan duct line profile or line 6 joining virtually the two inner walls 29, 39 represents a theoretical surface which corresponds to the theoretical envelope for perfect continuous aerodynamic delimitation of the stream of the gas flow in direct jet mode, internal to the engine, represented by the arrow F1.

The thrust reverser structure described up to this point is known. In direct jet mode, some of the flow penetrates the cavity 3, thus creating distortion of the flow and disturbances in the outflow. This results in aerodynamic losses which are detrimental to operation in forward thrust mode.

Furthermore, the development of very efficient thrust reversers, with very small ground clearances, has increased the likelihood of engine intake Foreign Object Damage and re-ingestion. Modern aircraft are increasingly featuring closely coupled wing/pylon/nacelle installations resulting in small wing slat to thrust reverser clearances. Small wing slat to thrust reverser clearances can result in direct wing slat thrust reverser jet impingement causing structural damage or, indirectly, can result in an increase of the wing's lift during landing, therefore reducing the tire braking force. Often these phenomena are revealed during aircraft flight testing and require immediate action by the thrust reverser manufacturer to keep certification on schedule.

According to the present invention, an arched device 4 is located in the door cavity 3, preferably approximately in the middle of said door cavity.

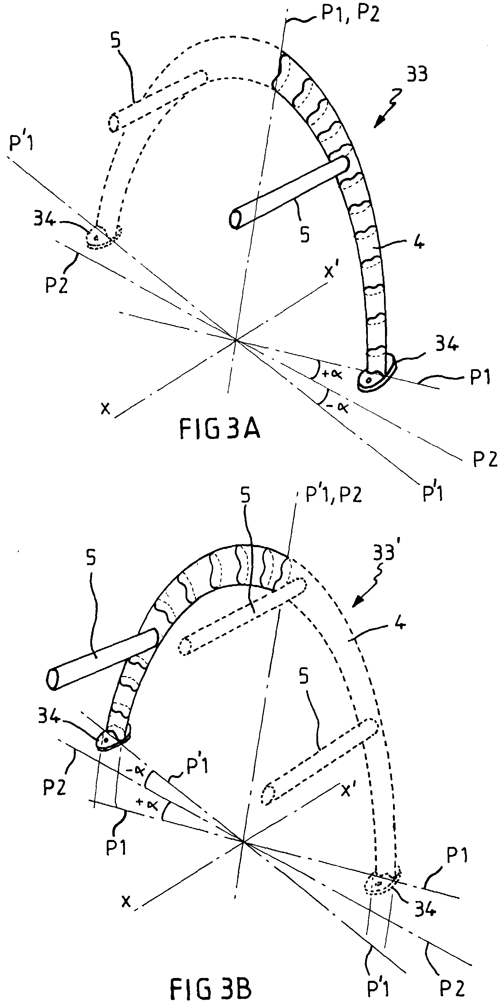

As can be seen from figure 3A, 3B and 5, the arched device 4 is assembled, into a module 33 (figure 3A) or 33' (Figure 3B), with structural bars 5, whose number may be varied (two in Figure 3A resulting in a Pi-shape module and three in Figure 3B resulting in a m-shape module) and which are approximately parallel to each other. Other module shapes are contemplated such as an inverted T-shape. Each end of the arched device 4 is provided with a fastening ear 34 for the attachment of the arched device 4, by means of bolts 35 (figure 5), to the side beams 2.

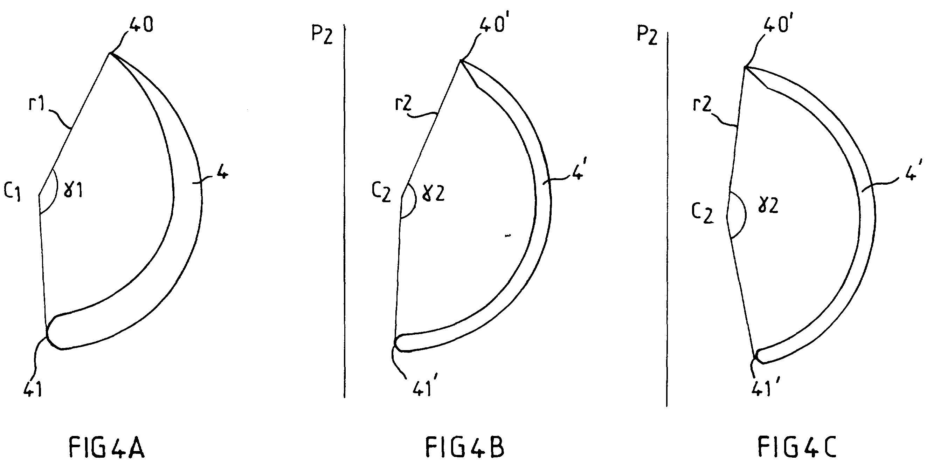

The cross section of the arched device 4 may have various shapes, such as a close to airfoil typical section of the device 4 shown in Figure 4A or a constant thickness of the device 4' shown in Figures 4B and 4C. The outward end 40 or 40' of the section is tapered while the inward end 41 or 41' is rounded. Furthermore, the cross sectional angular extent of the arched device 4, i.e. the angle γ₁ or γ₂ delimited by the radii joining the center of curvature (C₁ or C₂) of the arched device to the respective ends of the cross section thereof, can vary from 180° down to 90° and this variation may be gradual. For example, in the embodiment of Figure 4A, γ₁ = 150° whereas in the embodiment of Figures 4B and 4C, γ₂ = 160° . The radii of curvature r₁ and r₂ can themselves be gradually varied.

Moreover, the orientation of the arched device relative to a plane P2 normal to the engine center line X-X' can be varied as shown in Figures 4B and 4C and, as shown in Figures 3A, 3B and 7, the sweep angle α formed by the center-plane P1 of the arched device 4 and a plane P2 normal to the engine centerline X-X' may ranges from 0° to approximately 45° on each side (-α to +α) of said normal plane P2. In Figure 3A, the part of the arched device 4 represented in solid lines has its plane P1 at an angle of +α relative to plane P2, whereas the part in phantom lines has its plane P'1 at an angle of -α relative to plane P2. In Figure 3B, the part of the arched device 4 represented in solid lines has its plane P'1 at an angle of -α relative to plane P2, whereas the part in phantom lines has its plane P1 at an angle of +α relative to plane P2.

The sweep angle α may be gradually varied throughout the arched device 4 so as to produce more efflux turning in one local region of the reverser jet and less efflux turning in another region.

The arched device 4 may be sized so that, in the forward thrust mode (Figure 2A), its outer periphery nearly reaches the upstream inner surface 14a of the door, whereas its inner periphery nearly reaches line 6 and, so, the arched device 4 can be used to "fill" the door cavity 3 in forward mode.

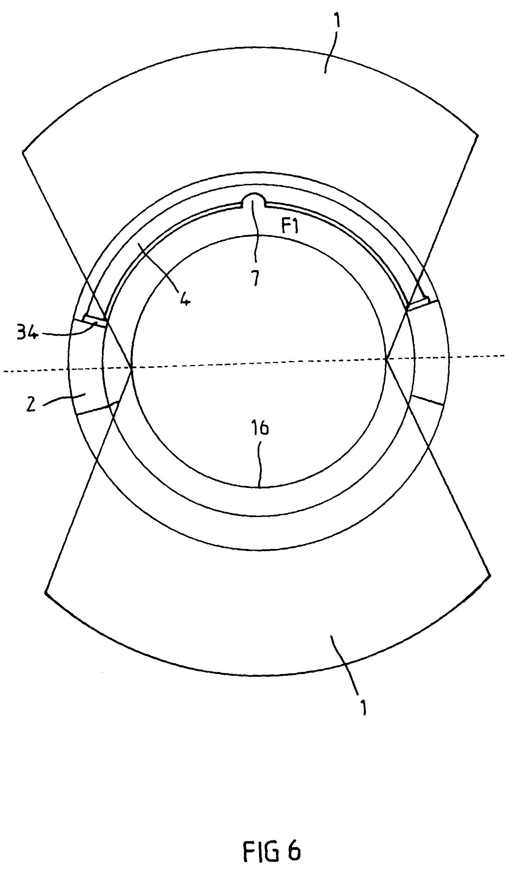

As can be seen in Figure 6, a cut out 7 is provided in the arched device 4 for allowing the actuator 9 (figure 7) to extend and operate without any form of contact between the arched device 4 and the actuator 9. Figure 8 shows in 9' and 9'' the cross-sectional displacement of the actuator rod between forward and reverse thrust mode.

As shown more clearly in Figure 5, the structural bars 5, which are rigidly constrained to the front frame 15 itself and located anywhere between the lateral side beams 2, are themselves profiled so that they act as guide bars and the angle β formed between a guide bar center-plane P3 and plane P2 may range from 0 to 30° on each side (-β to +β) of plane P2.

One of the present invention's advantages is its versatility and flexibility to efflux control adjustment on the runway during flight test development. The subject invention can control the efflux jet either by changing the circumferential efflux turning angle β of the structural stiffener bars 5 as shown in Figure 5 or by increasing the sweep angle α of the arched device as shown in Figure 7.

Another recurrent problem during flight testing can be insufficient reverse mode engine fan stall margin and/or compressor core stall margin caused by a deterioration of the engine operating line as a result of thrust reverser re-ingestion or insufficient thrust reverser discharge opening throat area leading to excessive engine back-pressure and in the limit to engine surge and/or fan stall. The conventional approach to solving this problem is either to increase the pit length by reducing the length of the fan ramp 8 or to decrease the length of the kicker plate 16 (Figures 2A and 2B). Both approaches increase the discharge throat area, i.e. substantially the area of plane RP (figure 2B) but decrease the reverser effectiveness. The present invention jointly increases the throat area and aerodynamics discharge coefficient, and the reverse thrust. In conclusion the engine reverse mode stall margin is increased without decreasing the reverse thrust.

As shown in Figure 2A the arched device 4 is easily stowed in forward thrust mode between the fan duct line 6, the upstream inner skin 14a of the door 1, the fan ramp 8 and the door inflection point 13 since the height **h** of the cross section of the arched device 4 and its radius of curvature **r** are of the order of magnitude of the depth **d** of the cavity 3. The arched device 4 thus does not protude past the fan duct line 6.

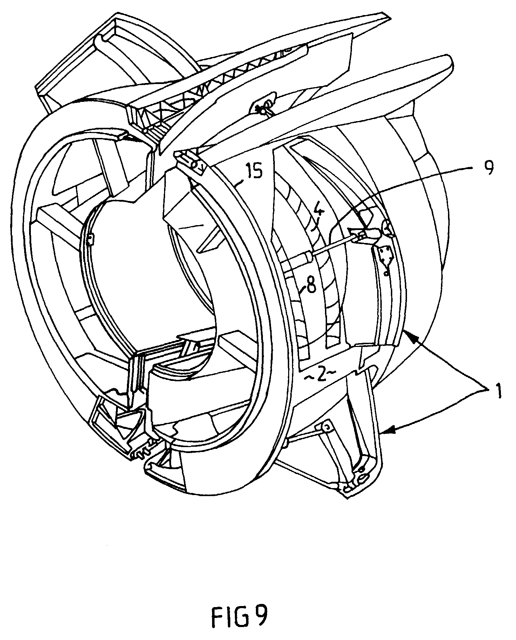

Turning now to figure 9, it shows a four-door reverser equipped with the arched device 4 of the invention. The references used in figure 9 designate the same parts as in the other figures.

While only some of the preferred forms of the invention have been shown, other obvious modifications and variations are possible in light of the above teachings. It is therefore to be understood that within the scope of the appended claims, the invention may be practiced otherwise than as specifically described.

## Claims

1. A thrust reverser for an aircraft turbojet with an outer casing surrounding an engine structure and defining therewith an annular channel (C) for the flow of a gas flux (F1) from an upstream region to a downstream region, said reverser comprising mobile doors (1) each located in an opening (26) provided in an intermediate section of said casing and defined, upstream, by a forward fixed structure (23) having a front frame (15), downstream, by an aft fixed structure (12) and laterally by side beams (2), said doors (1), operated by an actuation system (9), being pivotable from an inactive or forward thrust mode position, in which they are located in the prolongation of the fixed part (12) of the casing, to an active or thrust reversal mode position in which they extend transversely with respect to the annular channel (C) which they close-off while freeing in the casing a passage (P) for radially deflecting the flux (F1) outwardly and upstream, each door (1) having upstream and downstream extremities (37, 38, respectively), and upstream and downstream inner surfaces (14a, 14b, respectively) with an inflection point (13) between said upstream and downstream inner surfaces, a door cavity (3) being formed between said door inflection point (13), said door upstream inner surface (14a) and said door upstream extremity (37), characterized in that a fixed arched device (4) is located in said door cavity (3), roughly concentrically to said annular channel (C).

2. Thrust reverser according to claim 1, characterized in that said arched device (4) is rigidly attached to said lateral side beams (2) and to said front frame (15).

3. Thrust reverser according to claim 1 or 2, characterized in that it comprises one individual arched device (4) and one or more structural bars (5) that can be assembled together into a module (33, 33') or disassembled as individual elements for servicing, said module (33, 33') being rigidly attachable to said lateral side beams (2) and to said front frame (15).

4. Thrust reverser according to anyone of claims 1 to 3, characterized in that the cross sectional shape of the arched device (4) has an airfoil type profile.

5. Thrust reverser according to anyone of claims 1 to 3, characterized in that the cross sectional shape of the arched device (4') has a constant thickness profile.

6. Thrust reverser according to anyone of claims 1 to 5, characterized in that the arched device (4) fills the door cavity (3) in the forward thrust mode.

7. Thrust reverser according to anyone of claims 1 to 6, characterized in that the height (h) and the radius of curvature (r) of the arched device cross section are of the order of magnitude of the depth (d) of the door cavity (3).

8. Thrust reverser according to any one of claim 1 to 7, characterized in that a cut out (7) is provided in the arched device (4) for allowing the door actuation system (9) to extend and operate without any form of contact between said arched device (4) and said actuation system (9).

9. Thrust reverser according to anyone of claim 1 to 8, characterized in that the sweep angle (α) formed by the center-plane (P1) of the arched device (4) and a plane (P2) normal to the engine centerline (X-X') ranges from 0° to approximately 45° on each side of said normal plane (P2).

10. Thrust reverser according to claim 9, characterized in that said sweep angle (α) and/or said radius of curvature (r) are gradually varied throughout the arched device (4).

11. Thrust reverser according to anyone of claims claim 2 to 10, characterized in that said structural bars (5) are profiled guide bars rigidly constrained to said front frame (15) itself and located anywhere between said lateral side beams (2).

12. Thrust reverser according to claim 11, characterized in that the profiled guide bars (5) are approximately parallel to each other and in that the angle (β) formed between a guide bar center-plane (P3) and a plane (P2) normal to the engine centerline (X-X') ranges from 0 to 30° on each side of said normal plane.

13. Thrust reverser according to anyone of claims 1 to 12, in which the outer periphery of said annular channel (C) is defined by the inner wall (29) of the forward fixed structure (23) and the inner wall (39) of the aft fixed structure (12), the continuity of said outer periphery being interrupted by the opening (26) provided for the door (1), a fan duct line profile (6) joining virtually the two inner walls (29, 39), and the downstream part of the inner wall (29) of the forward fixed structure (23) forming a fan discharge edge (8), characterized in that, in the forward thrust mode position, the arched device (4) is stowed in a zone spanwise bound by said lateral side beams (2), longitudinally bound by said fan discharge edge (8) and said door inflection point (13), and radially bound by said fan duct line profile (6) and the upstream inner surface (14a) of the door.

14. Thrust reverser according to anyone of claims 1 to 13, characterized in that, along the engine centerline (X-X'), the arched device (4) is positioned approximately in the middle of said door cavity (3).
